# EUROPÄISCHE PATENTSCHRIFT

(11) **EP 2 562 496 B1**
(45) Veröffentlichungstag und Bekanntmachung des Hinweises auf die Patenterteilung: **03.10.2018**
(21) Anmeldenummer: 12005600.7
(22) Anmeldetag: 01.08.2012
(51) Int. Cl.: F25D 23/00, B32B 5/18, B29C 41/22, B32B 27/40

(54) **Verfahren zur Herstellung eines Bauteils eines Kühl- und/oder Gefriergerätes**
Method for manufacturing a component of a cooling and/or freezing device
Procédé de fabrication d'un composant d'un appareil de réfrigération et/ou de refroidissement

(30) Priorität: 23.08.2011 DE 102011111476; 13.10.2011 DE 102011115979; 24.07.2012 DE 102012014555
(43) Veröffentlichungstag der Anmeldung: 27.02.2013
(73) Patentinhaber: Liebherr-Hausgeräte Lienz GmbH, 9900 Lienz (AT)
(72) Erfinder: Gruidl, Thomas Dipl.-Ing., 9781 Oberdrauburg (AT)
(74) Vertreter: Herrmann, Uwe

(56) Entgegenhaltungen:
- CH-A- 414 144
- DE-A1- 1 479 988
- DE-A1-102005 019 210
- FR-A1- 2 126 126
- US-A- 4 005 919

## Beschreibung

Die vorliegende Erfindung betrifft ein Verfahren zur Herstellung eines Bauteils eines Kühl- und/oder Gefriergerätes sowie ein Kühl- und/oder Gefriergerät mit wenigstens einem gemäß dem Verfahren hergestellten Bauteil.

Aus dem Stand der Technik ist es bekannt, den Innenbehälter des Gerätes dadurch zu erhalten, dass eine extrudierte Platine einem Ziehvorgang unterzogen wird, bis der Innenbehälter die gewünschte Form eingenommen hat. Diese Vorgehensweise ist insofern nachteilig, als dass die Platinen gelagert werden müssen, d.h. einen gewissen Lagerbedarf aufweisen, als auch insofern, als dass eine Variation der Dicke des Materials für unterschiedliche Bereiche des Innenbehälters schwierig einstellbar ist. So kann beispielsweise der Fall eintreten, dass im Bereich der Behälterrippen, die einer vergleichweise hohen mechanischen Belastung ausgesetzt sind, bedingt durch den Ziehvorgang eine relativ geringe Dicke des Behältermaterials vorliegt.

Außenliegende Bauteile werden oft durch Umformen von beschichteten oder unlackierten Blechteilen hergestellt.

Aus dem Stand der Technik gemäß der DE 10 2005 019 210 A1 ist es des Weiteren bekannt, einen Innenbehälter eines Kühl- und/oder Gefriergerätes dadurch herzustellen, dass Schaum auf eine Form aufgetragen wird und der Schaum im Anschluß an den Auftrag aushärtet.

Aus der FR 2 126 126 ist ein Verfahren zur Herstellung eines Bauteils eines Kühl- und/oder Gefriergerätes bekannt.

Die DE 14 79 988 A1 zeigt ein Verfahren zur Herstellung eines Kühlschrankgehäuses, bei der in eine Form eine erste Schicht aufgespritzt wird und im Anschluss daran ein Schaumstoff eingebracht wird.

CH 414 144 A offenbart ein Verfahren zur Herstellung von Schaumstoffisolierwänden für Kühlschrankgehäuse und -türen.

US 4 005 919 A beschreibt einen Kühlschrankaufbau, der eine Verbundstruktur umfasst.

De 10 2005 019 210 A1 zeigt ein Herstellungsverfahren eines Bauteils eines Kühl- und/oder Gefriergeräts, bei dem das Bauteil durch Auftragen eines Schaums auf eine Form und anschließendes Aushärten erzeugt wird.

Der vorliegenden Erfindung liegt die Aufgabe zugrunde, ein Verfahren zur Herstellung eines Bauteils eines Kühl- und/oder Gefriergerätes bereitzustellen, mit dem auf vergleichsweise einfache Art und Weise flexibel Bauteile mit unterschiedlichen Eigenschaften hergestellt werden können.

Diese Aufgabe wird durch ein Verfahren mit den Merkmalen des Anspruchs 1 gelöst.

Unter dem Begriff "in eine Form eingebracht werden" ist auch der Fall zu verstehen, dass die eine oder mehreren Schichten auf eine Form aufgebracht werden, z.B. durch ein Lackier- oder Sprühverfahren.

Grundsätzlich kann in Rahmen der vorliegenden Erfindung vorgesehen sein, dass die Form Bestandteil des Bauteils ist oder dass die Form nach der Herstellung des Bauteils wieder entfernt wird und ggf. zur Herstellung eines neuen Bauteils zur Verfügung steht.

Denkbar ist es, dass über eine Schicht kompakten Materials eine oder mehrere weitere Schichten kompakten oder aufgeschäumten Materials auf eine Form aufgetragen werden und anschließend aushärten. Dabei kann die Schicht des kompakten Materials das Eigenschaftsprofil des Bauteils, beispielsweise die Festigkeit und/oder die wärmedämmenden Eigenschaften maßgeblich bestimmen. Diese Schicht kann dann in der genannten Form oder auch in einer anderen Form mit weiteren Schichten, wie beispielsweise einer oder zwei Deckschichten versehen werden, die andere Eigenschaften aufweisen können als die genannte kompakte Schicht.

Durch das erfindungsgemäße Verfahren wird somit ein mehrschichtiges Bauteil erhalten.

Denkbar ist es, dass das Bauteil eine oder mehrere Deckschichten auf einer oder beiden Seiten des Materialverbundes aufweist, die die äußere Oberfläche bilden, wobei diese Deckschichten entweder auf einer oder beiden Seiten des Materialverbundes angeordnet sein können und dünner ausgebildet sein können als eine weitere Schicht des Bauteils, die nicht die Deckschicht bildet. Die Deckschicht(en) können beispielsweise im Hinblick auf eine oder mehrere Eigenschaften Farbe, Lebensmittelechtheit, Kratzfestigkeit, Lichtechtheit die geforderten Eigenschaften an eine Oberfläche des Bauteils erfüllen.

Dabei ist des denkbar, dass die mehreren Schichten mit denselben oder mit unterschiedlichen Applikationsverfahren aufgebracht werden. Möglich ist es, die einzelnen Schichten bei Bedarf mit unterschiedlichen Applikationstechniken direkt auf eine Form bzw. in eine Form aufzubringen und aushärten zu lassen, so dass das Bauteil aus der Form entnommen werden kann.

In Betracht kommen beispielsweise Sprüh- oder Lackierverfahren.

Bei der genannten Form kann es sich um eine Positiv- oder um eine Negativform handeln.

Bei den Applikationsverfahren kann es sich beispielsweise um gängige Lackierverfahren, z.B. in 1-, 2- oder Mehrkomponententechnik (Hockdruck-, Mitteldruck oder Niederdruckverfahren) handeln. Von der Erfindung sind auch andere Verfahren, wie beispielsweise Hoch- oder Niederdruck-Mulitkomponenten PUR-Sprühverfahren umfaßt. In dem Lack können Trennmittel vorhanden sein, die in den Lack eingearbeitet sind.

Grundsätzlich ist es denkbar, dass die Herstellung aller oder mehrerer der Schichten des Bauteils in bzw. auf ein und derselben Form erfolgt oder auch in bzw. auf unterschiedlichen Formen bzw. Einrichtungen.

Bei dem fraglichen Bauteil kann es sich beispielsweise um ein Bauteil handeln, dass sich in dem gekühlten Bereich des Gerätes befindet, wie beispielsweise der Innenbehälter oder ein oder mehrere Einbauteile des Innenbehälters, wie Ablageböden, Schubladen etc. Es kann sich jedoch auch um ein Bauteil handeln, dass sich nicht in dem gekühlten Bereich des Gerätes befindet, wie beispielsweise ein Gehäuseteil, z. B. die Außentür oder eine oder mehrere Seiten-, Deck- oder Rückwandungen des Gehäuses oder dessen Boden.

Die Erfindung kann sich auf eine Tür oder einen Teil einer Tür als Bauteil beziehen. So ist es beispielsweise denkbar, dass das Bauteil die Innseite und/oder die Außenseite der Tür oder die gesamte Tür oder einen Teil der Tür bildet. Unter dem Begriff "Tür" ist jedes beliebige Verschlusselement, wie z.B. eine Tür im engeren Sinne oder auch eine Lade bzw. deren Front oder eine Klappe oder ein Deckel zu verstehen.

Denkbar ist es, dass wenigstens eine der mehreren Schichten durch ein Lackierverfahren und/oder durch ein Spritzverfahren und insbesondere durch das Auftragen, insbesondere durch das Aufspritzen von Schaum oder einem schäumbaren Material aufgebracht werden und/oder dass wenigstens eine der Schichten durch ein kompaktes Material gebildet wird, das in die Form eingelegt wird.

Möglich ist es, verstärkende Fasermaterialien zuzudosieren, so dass eine Verstärkung des Schichtmaterials des Bauteils erfolgt. Diese Zudosierung kann sowohl im Spritzkopf als auch durch externes Zudosieren im Sprühstrahl erfolgen.

Die Applikation, d.h. das Aufbringen bzw. Erzeugen der einzelnen Schichten erfolgt entweder manuell oder automatisiert, wie beispielsweise unter Zuhilfenahme von Robotern oder Hubgerüsten etc.

Besonders vorteilhaft ist es, wenn ein oder mehrere Einlegeteile und/oder Durchführungen und/oder Fasermaterialien in die Form und/oder in wenigstens eine der Schichten eingebracht werden, bevor diese aushärten/aushärtet. Auf diese Weise ist es möglich, Bauteile in eine oder mehrere Schichten einzubringen, d.h. eingegossene Bauteile zu erzeugen bzw. einzusetzen, die eine spätere Montage derselben überflüssig machen. Denkbar ist es, ein Dekorelement oder ein sonstiges Teil bzw. funktionelles Teil in die Form einzubringen, beispielsweise mittels eines Magneten und/oder das Teil mittels eines Magneten in der Form zu fixieren, bevor die Schichten eingebracht werden.

Durch das Einbringen von durchführenden Bereichen bzw. durchreichenden Bauteilen, die eine Verbindung bzw. Öffnung zwischen der Außenseite und der Innenseite des Bauteils herstellen, sind dichte, d.h. eingegossene Durchführungen denkbar. Diese haben den Vorteil, dass eine spätere Montage derartiger Bauteile entfallen kann, so dass sich der Montageprozess insgesamt vereinfacht. Dies kann insbesondere für den Innenbehälter von Interesse sein, bei dem eine oder mehrere Durchführungen beispielsweise für Stromkabel oder Kabel von Sensoren vorgesehen sein können.

Zwei der Schichten bestehen aus Polyurethan oder weisen dieses auf, wobei das Polyurethan in einer von diesen Schichten in kompakter Form und in der anderen in geschäumter Form vorliegt. Vorzugsweise ist vorgesehen, dass diese Schichten bereits im Verbund, d.h. in der Form oder zu einem späteren Zeitpunkt mit weiteren Schichten des Bauteils verbunden werden. Die genannten Schichten können vor allem zur Bereitstellung der mechanischen Eigenschaften beim Handling oder später während des Einsatzes des Gerätes dienen. Sie bestehen aus dem genannten PUR-Material, dass je nach Bedarf faserverstärkt ausgeführt sein kann.

In weiterer Ausgestaltung der Erfindung ist vorgesehen, dass das Bauteil wenigstens eine die Deckschicht des Bauteils bildende Schicht aufweist und dass die Deckschicht mit einem anderen Verfahren hergestellt wird als eine Schicht des mehrschichtigen Bauteils, die nicht die Deckschicht bildet. So ist es z.B. denkbar, die eine oder mehreren Deckschichten z.B. durch Lackieren herzustellen, wohingegen eine andere, innere Schicht, die nicht die Deckschicht bildet, aber an diese angrenzen kann, aus einem aufgeschäumten Material besteht.

Weiterhin kann vorgesehen sein, dass wenigstens eine der Schichten über die gesamte Erstreckung des Bauteils eine konstante Dicke aufweist oder dass wenigstens einer der Schichten eine über die Erstreckung des Bauteils veränderliche Dicke aufweist. Durch das erfindungsgemäße Verfahren ist es möglich, unterschiedliche Schichtdicken bzw. Materialstärken an unterschiedlichen Bereichen des Bauteils bereitzustellen. So ist es im Falle eines Innenbehälters möglich, die Materialdicke im Bereich der Rippen zur Auflage von Ablageböden größer auszubilden als in anderen, weniger belasteten Bereichen.

In weiterer Ausgestaltung der Erfindung ist vorgesehen, dass in dem Materialaufbau des erfindungsgemäßen Bauteils zumindest ein kältetechnisch aktives Element angeordnet ist. Es kann es sich dabei beispielsweise um eine Komponente des Kältemittelkreislaufs, wie beispielsweise den Verflüssiger oder den Verdampfer handeln. Denkbar ist es, dass das Eigenschaftsprofil der einzelnen Schichten des Materialaufbaus von den Bauteilanforderungen abhängig ist und entsprechend dahingehend optimiert wird. Auch ein sonstiges Element, wie z. B. ein nicht kältetechnisches Element, wie beispielsweise eine Leitung etc. kann in der genannten Weise in den Materialaufbau des erfindungsgemäßen Bauteils integriert werden.

Denkbar ist ein Aufbau, bei dem zumindest eine Schicht die Oberflächenfunktion einnimmt, die beispielsweise in einem beliebigen Lackierverfahren aufgebracht wird und als dünne Schicht ausgebildet sein kann, die für Farbe, Glanzgrad, UV-Stabilität, Kratzfestigkeit, Chemikalienbeständigkeit, lebensmittelrechtlichen Anforderungen, etc. relevant ist. Diese Schicht kann eine Kostenoptimierung ermöglichen, da eine oberflächentechnisch hochwertige Ausstattung des gesamten Verbundes den Aufbau wesentlich verteuern würde. Sie gestattet vor allem ohne hohen Aufwand die Verwendung von Farbe, Glanzgrad sowie allen anderen relevanten Oberflächeneigenschaften ohne Beeinflussung des übrigen Schichtaufbaus frei zu variieren.

Die Schicht kann des weiteren eine wärmeleitend ausgestattete Schicht, beispielsweise eine PUR-Kompaktschicht zur Wärmeübertragung, -verteilung und -speicherung und zum Schutz der möglicherweise sehr dünnen oberflächenfunktioanlen Schicht aufweisen. Diese wärmeleitend ausgestaltete Schicht kann beliebige metallische oder mineralische Füllstoffe zur Optimierung der Wärmeleitfähigkeit entfalten.

Des weiteren kann der Schichtaufbau eine wärmeleitend ausgestaltete dickere Schicht (z. B. Polyurethan oder ein anderes geeignetes Kompaktmaterial) zur Aufnahme des genannten kältetechnischen Elementes aufweisen. Dieses Element kann in die Schicht eingegossen werden oder oberflächlich aufgebracht werden, beispielsweise mit der Oberfläche verklebt sein. Denkbar ist es, das Aushärten der Schicht erst nach dem Anbringen des kältetechnischen Elementes vorzunehmen. Dies kann beispielsweise durch Beschleunigung mittels Hitze oder Strahlung (UV, IR, etc.) erfolgen.

Der Schichtaufbau kann des weiteren eine Isolations- oder Abdeckschicht aufweisen. Diese kann aus kompaktem oder aufgeschäumten PUR-Material oder einem sonstigen Material bestehen, das primär der Fixierung bzw. Einbettung des kältetechnischen Elementes aber auch der mechanischen Festigkeit des Gesamtaufbaus dient.

Dieser letztgenannten Schicht oder einer nachfolgenden Schicht können zur mechanischen Stabilisierung geeignete Fasermaterialien und/oder Füllstoffe zugegeben werden. Durch die vorliegende Erfindung wird durch den Aufbau eine kältetechnisch optimale, in Form sowie Funktionalität beliebig gestaltbare und automatisiert darstellbare und kostenmäßig vorteilhafte Bauteillösung erhalten.

Bei dem genannten kältetechnischen Element kann es sich beispielsweise um den Verdampfer, die Verdampferleitung, den Verflüssiger, Verflüssigerleitungen, etc. handeln, die vorzugsweise in den genannten Materialverbund integriert sind. Grundsätzlich können kältetechnische Komponenten bzw. Leitungen (wie z.B. Verdampfer oder Verflüssiger) bevorzugt (aber nicht nur) erst direkt am Bauteil realisiert werden (Wickeln am bestehenden Gehäuse), somit das ganze Gehäuseteil als kältetechnischer Verbund in einem Arbeitsgang hergestellt werden.

Eine Schicht weist Polyurea bzw. Polyharnstoff auf oder besteht daraus. Vorzugsweise wird ein Gelcoat aus diesem Material oder enthaltend dieses Material verwendet. Dieser Werkstoff hat den Vorteil, dass er bessere thermische und zum Teil auch bessere chemische Beständigkeit sowie höhere Reaktivität ohne zusätzliche Katalyse aufweist. Die hohe Reaktivität vermindert die Gefahr von Blasenbildung durch Reaktion des Isocyanathärters mit Oberflächenfeuchte des Werkzeugs oder Luftfeuchte. Der Verzicht auf Katalysatoren bzw. auf zusätzliche Katalysatoren erleichtert die Einhaltung lebensmittelrechtlicher Vorschriften.

Die Erfindung betrifft einen mehrschichtigen Aufbau des Bauteils mit folgenden Schichten. Das Bauteil kann genau diese drei genannten Schichten aufweisen oder daraus bestehen:
- 1. Schicht: Polyurea, funktional (50-300 my, chemikalienbeständig, lichtecht, kratzfest, farbgebend, lebensmittelecht, selbsttrennend, feuchteunempfindlich, lösemittelfrei)
   ∘ Vor allem die Eigenschaft "selbsttrennend" ist für eine industrielle Anwendung von Vorteil, da nur damit der Trennmitteleintrag vermieden wird, der nebst einem zusätzlichen Arbeitsschritt für das Eintrennen auch einen Materialaufbau im Werkzeug und somit eine regelmäßige Abreinigung desselben zur Folge hat. Auch erhöht sich die Prozesssicherheit, da kein Fehler (unbenetzte Werkzeugoberfläche) beim Eintrennen passieren kann.
   ∘ Nachdem das Polyurea-Material schneller reagiert als Wasser, ist der gesamte Vorgang unabhängig von Luftfeuchte oder Oberflächenfeuchte am Werkzeug, was bei einem Polyurethansystem zu Blasenbildung führen würde (Vorteil in der Prozesssicherheit). Diese kann auch nach der eigentlichen Applikation durch Feuchtediffusion und Reaktion mit dem Isocyanatüberschuss stattfinden.
   ∘ Die Lebensmittelechtheit ermöglicht auch die Herstellung von Bauteilen mit Lebensmittelkontakt
   ∘ Die Lösemittelfreiheit aller Schichten wirkt sich positiv auf die VOC-Bilanz bei der Fertigung als auch auf die Anlagenkosten (kein Ex-Schutz) aus.
- 2. Schicht: Polyurethan-kompakt, nur mechanisch stabilisierend, keine sonstige Funktionalität
- 3. Schicht: Polyurethan-Schaum, der nach Zusammenbau des gesamten Bauteils eingebracht wird

Vorzugsweise ist vorgesehen, dass sich alle drei Schichten denselben Härtermechanismus (Isocyanathärter) teilen, weshalb sie bei zeitnaher (wie vorgesehen) Applikationsfolge untereinander vernetzen also eine chemische Bindung ausbilden (keine Delaminationsprobleme)

Durch die Nutzung der Spritzform auch als Schäumform ist das Entformen des Bauteils zur weiteren Verarbeitung nicht notwendig, was wesentliche Vorteile im Processing mitbringt

Die Wanddicke der versteifenden 2. Schicht kann ausschließlich auf das Endprodukt optimiert werden, da vorzugsweise kein Handling des Rohteils vorgesehen ist und bei der Entformung die Haftkräfte über den PUR-Schaum abgeführt werden können. Damit ist eine wesentliche Materialeinsparung verbunden.

Die Taktzeit reduziert sich auf ein Minimum (Sprühauftrag ist allein geschwindigkeitsbestimmend), da das vollständige Aushärten der ersten beiden Schichten im Zuge des Aushärtens des PUR-Schaums abläuft. Damit erhöht sich der Ausstoß pro Werkzeug drastisch im Vergleich zu ungeschäumten Teilen. Zwar ließen sich die Systeme schneller einstellen, doch kann es bei extrem hoher Reaktivität der PUR-Schicht zu Oberflächenstörungen aufgrund zu hoher Temperaturen kommen.

Wird auf Glasfasern verzichtet, kommt es auch nicht zu den aus dem Bootsbau bekannten Blasenbildungsphänomenen. Von der Erfindung ist jedoch ebenso der Fall umfaßt, dass Fasern, wie z.B. Glasfasern eingebracht bzw. verwendet werden, um die gewünschten mechanischen bzw. tragenden Eigenschaften der Schichten zu erhalten.

Da das verwendete Gelcoat vorzugsweise bereits trennend (vor allem zu Metallen) eingestellt ist, werden metallische Einlegeteile (Funktionsteile aller Art) mit einem Primer vorbehandelt, um optimale Haftwerte zu erzielen.

Die wenigstens eine tragende Schicht des mehrschichtigen Aufbaus, wie beispielsweise die durch das Sprühcoating nach erfolgter Gelcoatapplikation erhaltene Schicht, kann bei Bedarf wenigstens zum Teil und vorzugsweise nur partiell mit Fasermaterialien verstärkt werden. Die kann beispielsweise automatisiert im Zuge des Sprühauftrages des PUR-Coatings (z.B. PUR CSM Verfahren der Fa. Hennecke) erfolgen. Als Vorteil ist zu nennen, dass sowohl das manuelle Fasereintragen als auch das Herstellen von Faser- bzw. Glasfaser-Preforms wegfällt, wodurch die Produktionszeit je Bauteil nicht negativ beeinflußt wird. Die Faserlänge kann beispielsweise im Bereich von bis zu 10 mm liegen, deren Menge bei bis zu 20 - 30 Gew.-%.

Vorzugsweise ist somit grundsätzlich vorgesehen, dass das Einbringen der Fasern im Rahmen des Auftrags der wenigstens einen Schicht, vorzugsweise im Rahmen des Sprühverfahrens erfolgt.

Vorzugsweise ist vorgesehen, dass sowohl durch die verfahrensbedingt beliebig beinflussbare Schichtstärke, wie auch durch den selektiven Glasfasereinsatz bzw. Fasereinsatz die Bauteilmechanik gezielt und unter optimaler Materialnutzung ausgeführt werden kann. Zudem reduziert die Glasfaser den thermischen Schrumpf des Bauteils nach dem Sprühen, so dass Vorteile im Hinblick auf die Reproduzierbarkeit erzielt werden können.

Die beschriebene Ausgestaltung der Erfindung betrifft sowohl das Verfahren als auch nachfolgend genannte Kühl- und/oder Gefriergerät selbst.

Die vorliegende Erfindung betrifft ferner ein Kühl- und/oder Gefriergerät mit einem oder mehreren Bauteilen, die nach einem der Ansprüche 1 bis 10 hergestellt sind.

Weitere Einzelheiten und Vorteile der Erfindung werden anhand eines im Folgenden beschriebenen Ausführungsbeispiels näher erläutert:
Das Ausführungsbeispiel betrifft ein Bauteil, das mehrschichtig ausgebildet ist und bei dem es sich beispielsweise um den Innenbehälter, den Außenmantel, eine Schublade, eine Trennplatte etc. handeln kann. Der Aufbau des Bauteils umfaßt mehrere Schichten aus unterschiedlichen Materialien, die kompakt oder aufgeschäumt ausgebildet sind. Diese Schichten werden dadurch erhalten, dass das entsprechende Material z.B. im Spritz- oder Lackierverfahren in eine Form eingebracht werden.

Das Eigenschaftsprofil der Oberfläche wird maßgeblich durch die beiden außenliegenden, hochwertigen Deckschichten bestimmt. Die eine oder mehreren innen liegenden, primär mechanisch oder isolationstechnisch relevanten Schichten können von diesen Deckschichten umschlossen sein. In diesem Falle sind die einen oder mehreren inneren Schichten ein- oder beidseitig von Deckschichten begrenzt.

Die im Verbund oder im späteren Verbau eingeschlossenen Schichten können primär dem Erreichen der mechanischen Eigenschaften des Bauteils dienen, die beim Handling oder dem späteren Einsatzzweck von Relevanz sind. Diese wenigstens eine zentrale Schicht kann aus kompakten oder aufgeschäumten PUR-Material bestehen, das mit Fasermaterial verstärkt sein kann, um die mechanischen Eigenschaften zu verbessern. Durch den Einsatz nicht aufgeschäumter, d.h. kompakter Materialien lassen sich Aufbauten realisieren, die hinsichtlich Wärmeleitfähigkeit für den Verbau kältetechnischer Bauteile geeignet sind.

In bevorzugter Ausgestaltung ist vorgesehen, dass mehrere und vorzugsweise alle Schichten des Bauteils in ein und derselben Form erzeugt werden, wobei die Applikationsverfahren, mit denen die Schichten in die Form eingebracht werden, für alle Schichten identisch oder unterschiedlich sein können.

Der mehrschichtige Aufbau stellt sowohl verfahrenstechnisch als auch kostenmäßig eine Weiterentwicklung bekannter Bauformen dar, da beispielsweise die hochwertigen Deckschichten in einem anderen Applikationsverfahren aufgebracht werden können, z.B. durch Lackieren, als innenliegende Schichten, die beispielsweise durch Aufschäumen bzw. eine Spritztechnik, insbesondere durch eine PUR-Spritztechnik erhalten werden können. Diese mittleren Schichten können z.B. allein mechanische oder als Wärmebarriere dienenden Eigenschaften aufweisen. Die wenigstens eine Deckschicht kann somit homogener in der Schichtstärke und damit in der Summe wesentlich dünner aufgetragen werden, was entsprechende Kostenvorteile mit sich bringt.

Dadurch ist es möglich, für viele Anwendungen spezifische Oberflächeneigenschaften zu realisieren, wie beispielsweise UV-Beständigkeit, Chemikalienbeständigkeit, Farbe, Kratzfestigkeit, Lebensmittelechtheit, elektrische Leitfähigkeit, ohne dabei materialspezifischen Einflüssen zu unterliegen, wie unterschiedliches Schwindungsverhalten, Einschränkungen durch Verarbeitungsanforderungen etc.

Durch das erfindungsgemäße Verfahren ist es weiterhin möglich, die Schichtstärke der einzelnen Materiallagen je nach Bedarf am gesamten Bauteil zu variieren. Durch das Einbringen von versteifenden Fasermaterialien kann gezielt an mechanisch besonders beanspruchten Stellen eine Verstärkung erzielt werden.

In einer denkbaren Vorgehensweise zur Herstellung des Bauteils ist vorgesehen, dass eine Form zunächst durch ein erstes Applikationsverfahren, wie beispielsweise durch Lackieren eine erste Deckschicht eingebracht wird. Nach dem Aushärten bzw. Trocknen dieser Schicht erfolgt in einem weiteren Applikationsschritt das Aufbringen einer weiteren Schicht in derselben Form durch Aufspritzen einer Schicht aus einem aufschäumbaren PUR-Material. Diese Schicht bildet in dem Bauteil eine mechanisch stabile und zusätzlich wärmedämmende Schicht aus und grenzt unmittelbar an die bereits in der Form gebildete Deckschicht an.

Auf diese Schicht kann dann nach derer Aushärten in einem weiteren Schritt eine weitere Deckschicht aufgebracht werden, ggf. wieder durch ein Lackierverfahren. Auch dieser Schritt kann in derselben Form erfolgen, wie die beiden vorgenannten Verfahrensschritte.

Denkbar ist es, die Form mit einer Temperiermöglichkeit auszustatten, um einerseits die Aushärtzeiten der eingesetzten Materialien zu reduzieren und andererseits auch um das Entformen der Bauteile zu vereinfachen.

Die Form kann sich auf einer bei Bedarf verfahrbaren dreh- und kippbaren Trägereinheit befinden, die in Synchronisation mit der Applikationseinheit eine optimale Applikation des eingesetzten Beschichtungsmaterials ermöglicht.

Vorzugsweise weist die Form mechanische Element zum vereinfachten Entformen des fertigen Bauteils, wie Schieber oder dergleichen auf.

Wie oben ausgeführt, besteht eine vorteilhafte Weiterbildung des Verfahrens darin, dass vor dem Aushärten der betreffenden Schicht ein oder mehrere Bauteile in die Schicht eingebracht werden, wie beispielsweise Aufnahmetaschen, Vorsprünge, die als Auflagen oder Führungen dienen etc. Dies erspart das spätere Einbringen dieser Bauteile in das Gerät.

Auch ist es denkbar, bereits beim Herstellprozess eine oder mehrere Durchführungen vorzusehen, wie beispielsweise eine oder mehrere Kabeldurchführungen im Innenbehälter, wodurch gleich beim Herstellprozess eine dichte Durchführung erhalten werden kann und nicht erst nachträglich eingebracht werden muß.

Wie oben ausgeführt, besteht eine vorteilhafte Ausgestaltung der Erfindung in einem mehrschichtigen Aufbau, wobei das oder die kältetechnischen Elemente im Zuge der Bauteilfertigung im Wandaufbau integriert werden. Dazu kann nach Darstellung der oberflächenfunktionalen Deckschicht das kältetechnische Element direkt mit derselben verklebt bzw. an derselben fixiert und durch die weiteren Schichten in der Wandung eingegossen werden. Dadurch sind eine optimale Kontaktierung des kältetechnischen Bauteils mit der Bauteilwand und damit ein optimaler Wärmeübergang gesichert.

Durch folgende Deckschichten kann eine Unterwandung des kältetechnischen Elementes mit dem zur Isolation dienenden PUR-Schaum gesichert unterbunden werden.

Das verfahrenstechnisch aufwendige Eintragen von Wärmeleitmassen sowie das Aufbringen von abdeckenden bzw. die Wandung schützenden Klebefolien sind nicht mehr notwendig und entfällt vorzugsweise.

Der mehrschichtige Aufbau mit integrierter Kältetechnik stellt insbesondere für komplexe Geometrien sowohl verfahrenstechnische als auch kältetechnisch und kostenmäßig einen erheblichen Fortschritt zu den bekannten Lösungen dar.

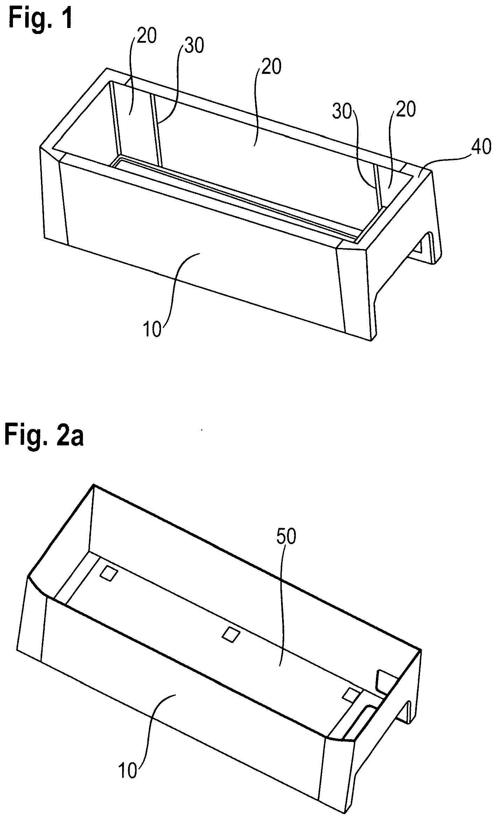

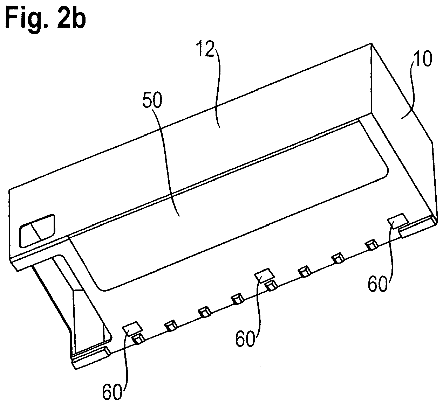

Ein Ausführungsbeispiel ist des weiteren in den Figuren 1 und 2 dargestellt.

In Figur 1 ist eine Kühl- und/oder Gefriertruhe dargestellt. Diese umfasst den Mantel 10, der das Außengehäuse der Truhe bildet und aus einem Vorderteil, einem rückwärtigen Teil und zwei Seitenteilen besteht. Im Inneren des von dem Gehäusemantel 10 umgebenen Bereiches befindet sich der beispielsweise aus Kunststoff oder aus Blechteilen bestehende Innenbehälter 20. Zwischen dem Mantel 10 und dem Innenbehälter 20 liegt eine Wärmeisolation vor, beispielsweise in Form einer PUR-Ausschäumung. Mit dem Bezugszeichen 30 sind Profilleisten gekennzeichnet und mit dem Bezugszeichen 40 ist ein Abdeckrahmen gekennzeichnet, der den oberen Bereich zwischen Mantel 10 und Innenbehälter 20 abschließt bzw. die obere Begrenzungsfläche der Truhe bildet.

Das im folgenden beschriebene Ausführungsbeispiel bezieht sich nun auf den in Figur 2a dargestellten Gehäuseaußenmantel 10, der aus einzelnen Blechteilen zusammengesetzt ist, wobei diese Blechteile einerseits die Frontseite, andererseits die Rückseite sowie schließlich auch die beiden Seitenteile bilden, die die Frontseite mit der Rückseite verbinden.

Die untere Begrenzung des durch den Mantel 10 gebildeten Innenraums wird durch den Blechboden 50 gebildet. Figur 2b zeigt die Anordnung gemäß Figur 2a in einer perspektivischen Ansicht von unten, wobei mit dem Bezugszeichen 50 der Blechboden, mit dem Bezugszeichen 12 die Blechrückwand und mit dem Bezugszeichen 60 Verstärkungsplatten gekennzeichnet sind, die im Bereich des Blechbodens 50 angeordnet sind.

Zur Herstellung der erfindungsgemäßen Kühl- bzw. Gefriertruhe gemäß der Figuren 1 und 2 ist nun vorgesehen, dass zunächst die den Mantel bildenden Blechteile in eine beheizte Form eingelegt und beispielsweise magnetisch oder über Sauger fixiert werden. Die dargestellte Rückwand 12 sowie der Boden 50 bestehen in diesem Ausführungsbeispiel aus energietechnischen Gründen aus Stahlblech, zwingend erforderlich ist dies jedoch nicht.

Zunächst wird z. B. mittels eines Roboters eine außenliegende, oberflächenfunktionale Lackschicht appliziert.

In einem nächsten Verfahrensschritt wird diese Lackschicht gegebenenfalls unterstützt durch UV-Strahlung ausgehärtet. Dieser Prozess kann beispielsweise 1 - 3 min dauern. Je nach Lack ist es ebenfalls denkbar, eine Aushärtung bzw. eine Zwischentrocknung wegzulassen, so dass keine Wartezeiten im Prozess auftreten.

Im Anschluss daran wird eine kompakte PUR-Schicht z. B. mittels eines Roboters appliziert, die die Bauteiloberfläche zusätzlich mechanisch verstärkt. Sofern erforderlich, kann im Anschluss daran ein kurzes Antrocknen, beispielsweise in der Zeitspanne von 1 - 3 min erfolgen.

Sodann wird z. B. mittels eines Roboters eine zweite, faserverstärkte Schicht in den potentiell mechanisch beanspruchten Bereichen appliziert, sofern dies im speziellen Bedarfsfall erforderlich ist.

Anschließend erfolgt ebenfalls ein kurzes Antrocknen, beispielsweise in der Zeitspanne 1 - 3 min, sofern dies erforderlich ist.

Sodann erfolgt das Aufbringen der das Bauteil tragenden Hauptschicht aus ausgeschäumtem PUR, das heißt Polyurethan sowie das anschließende Durchhärten des Bauteils bzw. der PUR-Schicht. Dies kann beispielsweise 3 - 5 min dauern.

Schließlich kann das Bauteil zur weiteren Verarbeitung entformt werden und es kann eine Überprüfung der Formoberfläche auf Rückstände und Reinigung derselben vor dem Start des nächsten Zyklus erfolgen.

Je nach System (Lack und PUR) ist es möglich, die angesprochenen Schritte der Antrocknung bzw. Zwischentrocknung vorzunehmen oder auch diese wegzulassen, sofern dies die verwendeten Materialien zulassen.

Die Applikation der genannten zweiten, faserverstärkten Schicht kann gegebenenfalls auch weggelassen werden, sofern dies aus mechanischen Gründen nicht erforderlich ist. Die faserverstärkte Schicht kann flächendeckend oder auch nur in den potentiell mechanisch beanspruchten Bereichen angebracht werden.

## Patentansprüche

1. Verfahren zur Herstellung eines Bauteils eines Kühl- und/oder Gefriergerätes, wobei
das Bauteil mehrschichtig aufgebaut ist und dadurch hergestellt wird, dass wenigstens eine Schicht, vorzugsweise mehrere oder alle Schichten des Bauteils in eine Form, vorzugsweise in ein und dieselbe Form, eingebracht werden und im Anschluß daran aushärten, und
die genannten Schichten aus unterschiedlichen Materialien bestehen, wobei das Bauteil mit wenigstens drei Schichten hergestellt wird, die vorzugsweise unmittelbar miteinander in Kontakt stehen, wobei
die erste Schicht aus Polyurea besteht oder dieses aufweist, die zweite Schicht aus kompaktem Polyurethan besteht oder dieses aufweist, und
die dritte Schicht aus Polyurethan-Schaum besteht oder diesen aufweist.

2. Verfahren nach Anspruch 1, **dadurch gekennzeichnet, dass** die mehreren Schichten mit denselben oder mit unterschiedlichen Applikationsverfahren eingebracht werden.

3. Verfahren nach Anspruch 1 oder 2, **dadurch gekennzeichnet, dass** wenigstens eine der mehreren Schichten durch ein Lackierverfahren und/oder durch ein Spritzverfahren und insbesondere durch das Auftragen, insbesondere durch das Aufspritzen von Schaum oder einem schäumbaren Material eingebracht werden und/oder dass wenigstens eine der Schichten durch ein kompaktes Material gebildet wird, das in die Form eingelegt wird oder die Form oder einen Teil der Form bildet.

4. Verfahren nach einem der vorhergehenden Ansprüche, **dadurch gekennzeichnet, dass** ein oder mehrere Einlegeteile und/oder Durchführungen und/oder Fasermaterialien in die Form und/oder in wenigstens eine der Schichten eingebracht werden, bevor diese aushärten/aushärtet.

5. Verfahren nach Anspruch 4, **dadurch gekennzeichnet, dass** die Fasermaterialien, vorzugsweise Glasfasern in einem Sprühvorgang zur Erzeugung wenigstens einer der Schichten in das Bauteil eingebracht werden.

6. Verfahren nach Anspruch 1, wobei vorgesehen ist, dass die 3. Schicht nach dem Zusammenbau des gesamten Bauteils eingebracht wird.

7. Verfahren nach einem der vorhergehenden Ansprüche, **dadurch gekennzeichnet, dass** wenigstens zwei der Schichten des Bauteils, vorzugsweise die erste, zweite und dritte Schichten denselben Härtemechanismus aufweisen und beim Aushärten untereinander vernetzen.

8. Verfahren nach einem der vorhergehenden Ansprüche, **dadurch gekennzeichnet, dass** das Bauteil wenigstens eine die Deckschicht des Bauteils bildende Schicht aufweist und dass die Deckschicht mit einem anderen Verfahren hergestellt wird als eine Schicht des mehrschichtigen Bauteils, die nicht die Deckschicht bildet.

9. Verfahren nach einem der vorhergehenden Ansprüche, **dadurch gekennzeichnet, dass** wenigstens eine der Schichten über die gesamte Erstreckung des Bauteils eine konstante Dicke aufweist oder dass wenigstens einer der Schichten eine über die Erstreckung des Bauteils veränderliche Dicke aufweist.

10. Verfahren nach einem der vorhergehenden Ansprüche, **dadurch gekennzeichnet, dass** das Bauteil wenigstens ein kältetechnisch aktives Element und/oder wenigstens ein sonstiges Element aufweist, das vorzugsweise in das Bauteil integriert ist

11. Verfahren nach Anspruch 10, **dadurch gekennzeichnet, dass** das kältetechnisch aktive Element in wenigstens einer der Schichten, zwischen wenigstens zwei der Schichten oder auf der Oberfläche des Bauteils aufgebracht ist, wobei die Fixierung des Elementes beispielsweise durch Eingießen oder Verkleben erfolgen kann.

12. Verfahren nach Anspruch 10 oder 11, **dadurch gekennzeichnet, dass** das kältetechnisch aktive Element in eine Isolations- und/oder Abdeckschicht eingebettet wird oder von dieser zumindest teilweise bedeckt wird, wobei die Schicht aus ausgeschäumtem PUR-Material bestehen kann.

13. Kühl- und/oder Gefriergerät mit einem oder mehreren Bauteilen, die nach einem der Ansprüche 1 bis 12 hergestellt sind.

## Claims

1. A method for manufacturing a component of a refrigerator and/or freezer, wherein the component is of multilayer construction and is manufactured in that at least one layer, preferably several or all layers of the component are introduced into a mold, preferably into one and the same mold, and subsequently are cured, and said layers consist of different materials,
wherein the component is manufactured with at least three layers which preferably directly are in contact with each other, wherein the first layer consists of polyurea or includes the same, the second layer consists of compact polyurethane or includes the same, and the third layer consists of polyurethane foam or includes the same.

2. The method according to claim 1, **characterized in that** the several layers are introduced by means of the same or different application methods.

3. The method according to claim 1 or 2, **characterized in that** at least one of the several layers is introduced by a painting method and/or by a spraying method and in particular by applying, in particular by spraying on foam or a foamable material and/or that at least one of the layers is formed by a compact material which is placed into the mold or which forms the mold or a part of the mold.

4. The method according to any of the preceding claims, **characterized in that** one or more insertion parts and/or lead-throughs and/or fiber materials are introduced into the mold and/or into at least one of the layers, before the same is/are cured.

5. The method according to claim 4, **characterized in that** the fiber materials, preferably glass fibers, are introduced into the component in a spraying operation for generating at least one of the layers.

6. The method according to claim 1, wherein it is provided that the third layer is introduced after the assembly of the entire component.

7. The method according to any of the preceding claims, **characterized in that** at least two of the layers of the component, preferably the first, second and third layer, have the same curing mechanism and cross-link with each other on curing.

8. The method according to any of the preceding claims, **characterized in that** the component includes at least one layer forming the top layer of the component and that the top layer is made by a different method than a layer of the multilayer component which does not form the top layer.

9. The method according to any of the preceding claims, **characterized in that** at least one of the layers has a constant thickness over the entire extension of the component or that at least one of the layers has a thickness which is variable over the extension of the component.

10. The method according to any of the preceding claims, **characterized in that** the component includes at least one element which is active in terms of refrigeration and/or at least one other element which preferably is integrated into the component.

11. The method according to claim 10, **characterized in that** the element which is active in terms of refrigeration in at least one of the layers is applied between at least two of the layers or on the surface of the component, wherein the fixation of the element can be effected for example by potting or adhesive bonding.

12. The method according to claim 10 or 11, **characterized in that** the element which is active in terms of refrigeration is embedded into an insulation and/or covering layer or is at least partly covered by the same, wherein the layer can consist of foamed PUR material.

13. A refrigerator and/or freezer comprising one or more components which are manufactured according to any of claims 1 to 12.

## Revendications

1. Procédé de fabrication d'un composant d'un réfrigérateur et/ou congélateur, dans lequel le composant présente une structure multicouche et est fabriqué en ce qu'au moins une couche, de préférence plusieurs ou toutes les couches du composant sont introduites dans un moule, de préférence dans un seul et même moule, et durcissent ensuite, et lesdites couches sont constituées de différents matériaux,
dans lequel le composant est fabriqué avec au moins trois couches, qui de préférence directement sont en contact l'une avec l'autre, la première couche étant constituée de polyurée ou comprenant celle-ci, la deuxième couche étant constituée de polyuréthane compact ou comprenant celle-ci, et la troisième couche étant constituée de mousse de polyuréthane ou comprenant celle-ci.

2. Procédé selon la revendication 1, **caractérisé en ce que** les plusieurs couches sont introduites en utilisant les mêmes ou différents procédés d'application.

3. Procédé selon la revendication 1 ou 2, **caractérisé en ce qu'**au moins une des plusieurs couches est introduite par un procédé de peinture et/ou par un procédé de pulvérisation et en particulier par l'application, en particulier par l'aspersion de mousse ou d'un matériau apte au moussage et/ou qu'au moins une des couches est formée par un matériau compact, qui est placé dans le moule ou forme le moule ou une partie du moule.

4. Procédé selon l'une quelconque des revendications précédentes, **caractérisé en ce qu'**une ou plusieurs pièces d'insertion et/ou traversées et/ou matériaux fibreux sont introduites/introduits dans le moule et/ou dans au moins une des couches, avant que celle(s)-ci durcisse/durcissent.

5. Procédé selon la revendication 4, **caractérisé en ce que** les matériaux fibreux, de préférence des fibres de verre, sont introduits/introduites dans le composant dans une opération de pulvérisation pour générer au moins une des couches.

6. Procédé selon la revendication 1, dans lequel il est prévu que la troisième couche est introduite après l'assemblage du composant entier.

7. Procédé selon l'une quelconque des revendications précédentes, **caractérisé en ce qu'**au moins deux des couches du composant, de préférence la première, la deuxième et la troisième couche, possèdent le même mécanisme de durcissement et se réticulent l'une à l'autre lors du durcissement.

8. Procédé selon l'une quelconque des revendications précédentes, **caractérisé en ce que** le composant possède au moins une couche formant la couche supérieure du composant et que la couche supérieure est fabriquée par un autre procédé qu'une couche du composant multicouche, qui ne forme pas la couche supérieure.

9. Procédé selon l'une quelconque des revendications précédentes, **caractérisé en ce qu'**au moins une des couches possède une épaisseur constante sur toute l'étendue du composant ou qu'au moins une des couches possède une épaisseur variable sur l'étendue du composant.

10. Procédé selon l'une quelconque des revendications précédentes, **caractérisé en ce que** le composant possède au moins un élément actif en termes de réfrigération et/ou possède un autre élément, qui de préférence est intégré dans le composant.

11. Procédé selon la revendication 10, **caractérisé en ce que** l'élément actif en termes de réfrigération dans au moins une de couches est appliqué entre au moins deux des couches ou sur la surface du composant, la fixation de l'élément pouvant être effectuée par exemple par empotage ou collage.

12. Procédé selon la revendication 10 ou 11, **caractérisé en ce que** l'élément actif en termes de réfrigération est incorporé dans une couche d'isolation et/ou de couverture ou est au moins partiellement couvert de celle-ci, la couche pouvant être constituée de matériau de PUR expansé.

13. Réfrigérateur et/ou congélateur avec un ou plusieurs composants, qui sont fabriqués selon l'une quelconque des revendications 1 à 12.
